# FASCICULE DE BREVET EUROPEEN

(11) **EP 0 637 982 B1**
(45) Date de publication et mention de la délivrance du brevet: **04.02.1998**
(21) Numéro de dépôt: 94908371.1
(22) Date de dépôt: 25.02.1994
(51) Int. Cl.: B01D 3/26, B01D 1/14

(54) **PROCEDE POUR LE TRANSFERT DE CONSTITUANTS AVEC TRANSFERT THERMIQUE ENTRE UN COURANT DE LIQUIDE ET UN COURANT DE VAPEUR, INSTALLATION SEPARATRICE POUR LA MISE EN OEUVRE DU PROCEDE.**
VERFAHREN ZUR ÜBERTRAGUNG VON BESTANDTEILEN UND WÄRME ZWISCHEN EINEM FLÜSSIGKEITSSTROM UND EINEM DAMPFSTROM, VORRICHTUNG ZUR DURCHFÜHRUNG DES VERFAHRENS.
METHOD FOR TRANSFERRING COMPONENTS AND HEAT BETWEEN A LIQUID SREAM AND A VAPOUR STREAM, SEPARATION APPARATUS THEREFOR.

(30) Priorité: 26.02.1993 FR 9302205
(43) Date de publication de la demande: 15.02.1995
(73) Titulaire: ORIEUX, Adrien, 83140 Six Fours les Plages (FR)
(72) Inventeur: ORIEUX, Adrien, 83140 Six Fours les Plages (FR)
(86) Numéro de dépôt international: FR9400205
(87) Numéro de publication internationale: WO9419080

(56) Documents cités:
- DE-B- 1 237 067
- FR-A- 915 638
- FR-E- 57 672
- US-A- 2 554 428

## Description

L'invention concerne un procédé pour le transfert de constituants avec transfert thermique entre un courbant de liquide et un courant de vapeur circulant en sens contraire par étapes successives, et une installation séparatrice pour la mise en oeuvre de ce procédé.

L'invention peut s'appliquer à la distillation si l'on prévoit, en outre, au moins une alimentation en charge à distiller dans un étage intermédiaire,au moins une conduite pour l'élimination et/ou la condensation de la vapeur à une extrémité, le condensat pouvant être réintroduit dans l'appareil, au moins une conduite pour l'élimination et/ou la vaporisation du liquide à l'autre extrémité, la vapeur pouvant être réintroduite dans l'appareil, une source de refroidissement permettant de condenser la vapeur, une source de chaleur permettant de vaporiser le liquide.

On connait par FR-A-915 638, un procédé et un dispositif pour le distillation fractionée de liquides. Il s'agir d'un système particulier de colonnes à plateaux avec éléments superposés, le liquide s'écoulant globalement verticalement sous l'effet de le gravité. A le différence de cet art connu, l'invention propare un procédé et une installation tels que revendiqués.

L'appareil de l'invention de conception compacte et sensiblement horizontale ne comporte pas d'empilement d'étages de distillation, le nombre d'étages est donc uniquement défini en fonction des paramètres physicochimiques de la séparation, la perte de charge du courant de vapeur dans chacun des étages et la perte de charge totale alouée à ce courant de vapeur.

Les figures 1 à 5 présentées en annexes illustrent les descriptions de deux exemples de réalisation.
La figure 1 représente schématiquement les éléments d'une première installation;
La figure 2 représente un étage de constitution particulière pour l'installation de la figure 1;
La figure 3 représente un étage de constitution modulaire dans le cas d'une juxtaposition d'étages tels que décrits dans la figure 2;

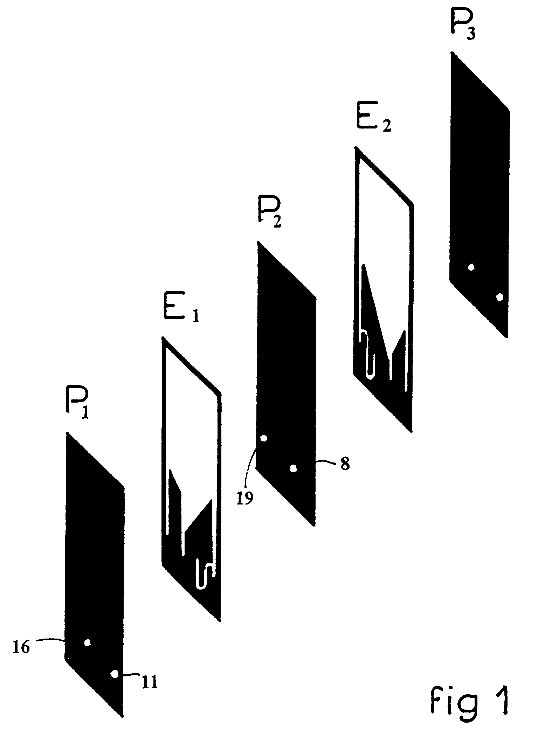

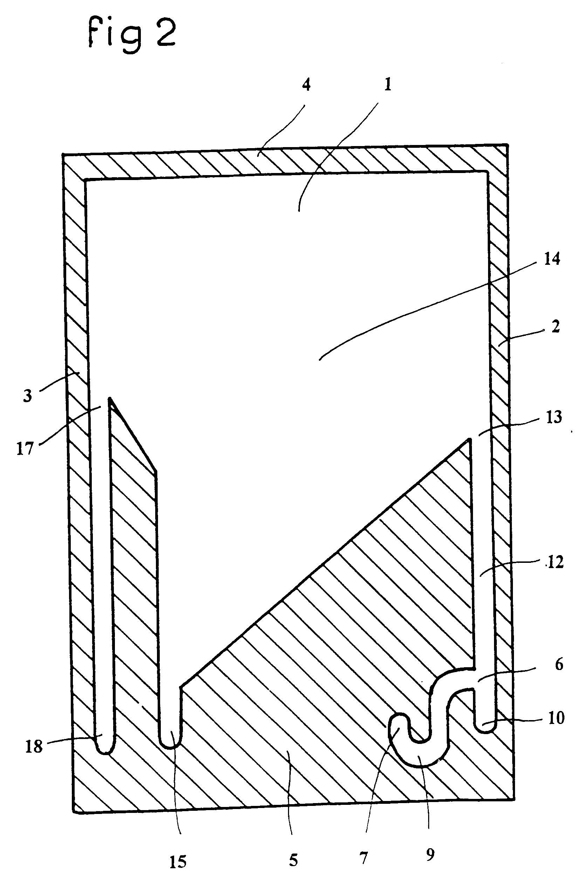

Dans la figure 1 sont représentés en vue éclatée deux étages contiguës en position alternée E1 et E2 d'une installation comportant un nombre défini d'étages, tous n'étant pas représentés, ainsi que leurs parois communes aux étages immédiatement précèdent et immédiatement suivant P1, P2, P3. Chaque étage, tel que l'étage E1 représenté sur les figures 1 & 2, comporte une chambre 1 délimitée par les parois communes P1 & P2 précédemment décrites ainsi que par les côtés 2 et 3 sensiblement verticaux, un plafond 4 sensiblement horizontal ainsi qu'un plancher 5 dans lequel aboutissent en position basse toutes les extrémités de la chambre servant de collecteur ou d'alimentation en liquide ou en vapeur de l'étage. La chambre contient une zone de mélange 6 du liquide venant de l'extrémité 7 en communication avec l'étage immédiatement suivant E2 au moyen de l'orifice 8 percé dans la paroi P2 et du siphon 9 et de la vapeur venant de l'extrémité 10 en communication avec l'étage immédiatement précèdent, non représenté sur la figure 1, au travers de l'orifice 11 percé dans la paroi P1. Le mélange passe au travers de la zone d'entraînement 12 avant d'atteindre au moyen du passage 13 dans sa partie supérieure la zone de séparation 14 de direction sensiblement horizontale et transversale à l'appareil. Des chicanes non représentées sur les figures 1 & 2 peuvent être ajoutées dans les zones 12, 13 et à l'entrée de la zone 14 pour faciliter le contact entre liquide et vapeur ainsi que des restrictions de section de passage du liquide venant du siphon 9 et de la vapeur venant de l'extrémité 10 à l'entrée de la zone de mélange 6 pour en faciliter ledit mélange. Le liquide est évacué de la zone de séparation 14 à l'extrémité basse 15 de la chambre en communication avec l'étage immédiatement inférieur, non représenté sur la figure 1, au travers de l'orifice 16 de la paroi P1, la vapeur est évacuée en partie haute de la zone 14 au moyen du passage 17 et de l'extrémité basse 18 en communication avec l'étage immédiatement supérieur E2 au moyen de l'orifice 19 percé dans la paroi P2.

Chaque étage peut être muni d'un apport de chaleur extérieure au travers des parois 2 & 3, induisant une vaporisation partielle du liquide au niveau de la zone de mélange et d'entraînement, ainsi que d' un moyen de refroidissement au travers du plafond 4 par une source extérieure, induisant une condensation partielle du liquide, de façon à faciliter les échanges de constituant au niveau de chacun des étages. L'axe commun aux chambres peut être incliné de 0,5 à 10 degrés sur l'horizontale pour faciliter l'écoulement liquide de chambre en chambre.

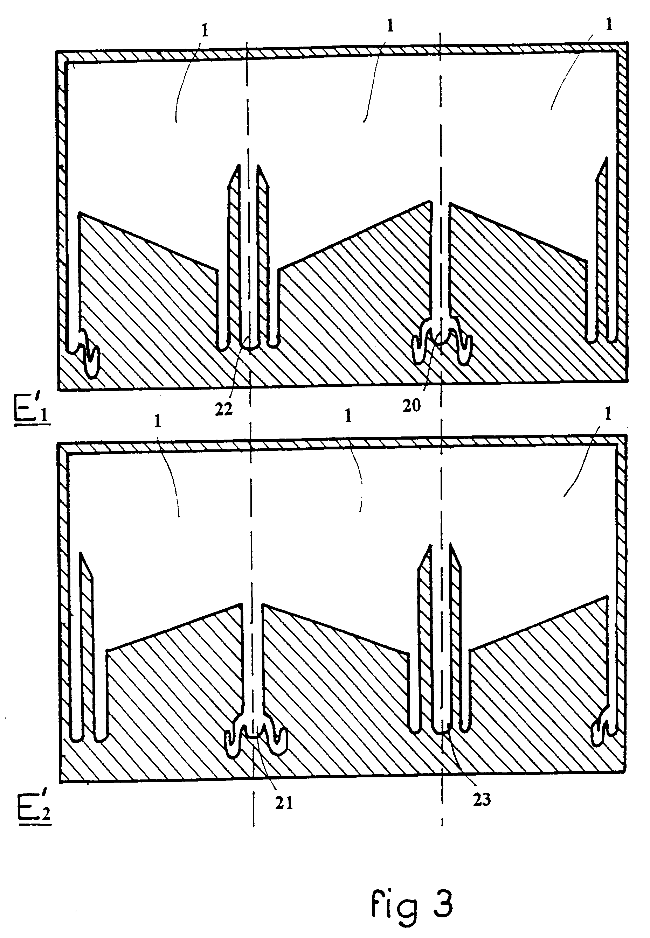

La largeur de chaque chambre, caractérisée par la distance qui sépare deux parois consécutives, est calculée en fonction des paramètres opératoires et principalement du débit de vapeur à traiter. Dans le cas de débits importants, il peut être avantageux, en plus d'une largeur de chambre importante, de disposer de plus d'une chambre par étage, ceci peut être obtenu de façon modulaire par juxtaposition d'appareils identiques à ceux précédemment décrits sur les figures 1 & 2. Dans ce cas, les chambres juxtaposées doivent avoir des directions opposées au niveau de leur zone de séparation respective, les zones de séparation et d'entrainement alternant d'un étage à l'autre de façon que les zones d'entrainement de chaque étage soient contiguës aux zones de séparation des étages respectivemment immédiatement précédent et immédiatement suivant pour permettre la mise en communication de chacun des étages avec les autres au moyen d'orifices percés dans les parois séparant les étages tel que décrit dans les figures 1 & 2. Pour une meilleure homogéneïsation les chambres peuvent avoir des zones de mélange et d'entraînement communes ainsi que des sorties vapeur communes. La figure 3 présente deux étages contiguës E'1 et E'2 disposant chacun de trois chambres modulaires juxtaposées du type de celles décrites sur les figures 1 & 2, les trois chambres 1 pour E'1, les trois chambres 1 pour E'2, certaines ayant des zones de mélange et d'entrainement communes telles que 20 & 21 et/ou des sorties de vapeur communes telles que 22 & 23.

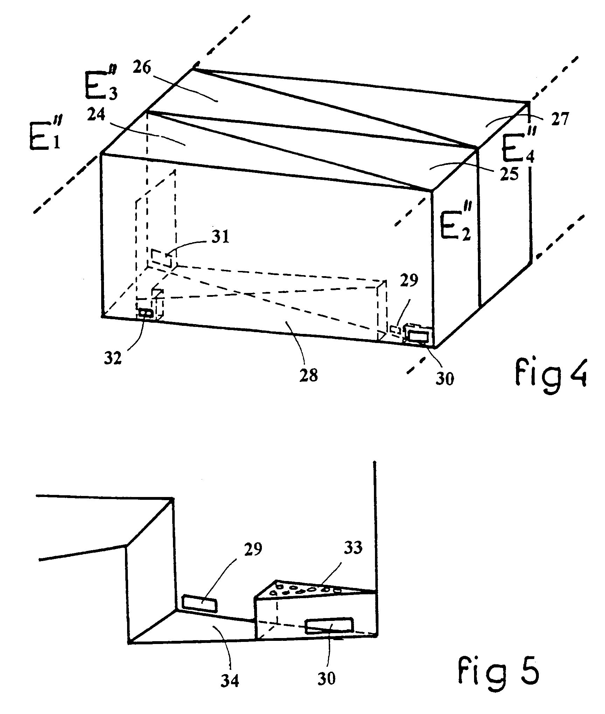

Dans le cas de débits particuliérement importants, il peut être avantageux, pour faciliter la séparation des courants vapeur et liquide, d'avoir des largeurs de chambre non uniformes, la zone d'entraînement de liquide par la vapeur étant située dans la portion la plus étroite de la chambre et la zone de séparation dans la zone la plus large de la chambre. La figure 4 présente le cas d'une installation dans lequel chaque étage E''1, E''2, E''3, E''4 faisant parti d'un ensemble non totalement représenté possède un plafond,respectivement 24, 25, 26, 27 et un plancher, respectivement 28 pour E''1, les autres n'étant pas visibles sur la figure 4,de forme triangulaire. Dans l'étage E''1, l'alimentation en liquide en provenance de l'étage immédiatemment suivant se fait par l'orifice 29 et en vapeur provenant de l'étage immédiatement précédent par l'orifice 30 représentés sur la figure 4 et la figure 5 comme détail de la zone d' entraînement de la seconde installation décrite sur la figure précédente, les sorties de vapeur 31 et de liquide 32 de la zone de séparation alimentent respectivement l'étage immédiatement suivant et l'étage immédiatement précédent. La figure 5 présente un type de distributeur à trous 33 pouvant être implanté en zone de mélange dans ce second exemple d'installation pour assurer à la fois une garde liquide faisant effet de siphon 34 pour éviter le passage de la vapeur ainsi qu'un mélange desdits courants de vapeur et de liquide.

## Revendications

1. Procédé pour le transfert de constituants avec transfert thermique entre au moins un courant de liquide et au moins un courant de vapeur circulant par étapes successives dans une série de n étages ayant un axe commun, la progression du liquide et de la vapeur s'effectuant en sens inverse d'un étage à l'autre,
caractérisé en ce que:
- l'axe commun est sensiblement horizontal,
- dans chaque étage de rang n, le liquide et la vapeur circulent à cocourant et transversalement à l'axe commun depuis au moins une zone d'entrainement dans laquelle du liquide provenant à travers un orifice (8, 16, 29) de l'étage de rang n+1 est introduit par aspiration, puis élevé par de la vapeur provenant de l'étage de rang n-1, le liquide et la vapeur étant ensuite séparés par gravité au cours d'une circulation sensiblement horizontale dans au moins une zone intermédiaire avant de s'écouler séparés dans au moins une zone de collecte, les zones d'entrainement et de collecte étant alternées d'un étage à l'autre de facon que le liquide et la vapeur séparés dans un étage de rang n alimentent directement en liquide, respectivement en vapeur, une zone d'entrainement de l'étage de rang n-1, respectivement n+1.

2. Installation pour la mise en oeuvre du procédé selon la revendication 1, caractérisée en ce qu'elle comporte en fonctionnement:
une pluralité d'étages séparateurs d'axe commun disposés horizontalement côte á côte en étant séparés par des parois communes sensiblement verticales,
chaque étage comprenant au moins un module dans lequel le liquide et la vapeur circulent à cocourant et transversalement à l'axe commun depuis une zone d'entrainement dans laquelle de la vapeur provenant d'un premier orifice (10,30) situé à une extremité latérale inférieure du module aspire à travers un siphon (9, 34) et élève du liquide provenant d'un second orifice (7, 29) adjacent jusqu'à une zone de collecte dans laquelle le liquide et la vapeur séparés s'écoulent par des troisième (15, 32), respectivement quatrième (18, 31) orifices adjacents situés à l'autre extrèmité latérale inférieure du module et séparés par un seuil (40), les zones d'entrainement et de collecte étant séparées par une zone intermédiaire dans laquelle le liquide et la vapeur sont séparés par gravité,
la disposition des orifices étant alternée d'un module au module correspondant de l'étage adjacent de facon à ce que les dits premier (10, 30) et quatrième (18, 31) orifices, respectivement deuxième (7, 29) et troisième (15, 32) orifices soient confondus en un orifice commun (11, 19), respectivement (8, 16) percé dans la paroi commune séparant ledit module du module correspondant de l'étage adjacent.

3. Installation selon la revendication 2 caractérisée en ce que chaque étage comporte une pluralité de modules juxtaposés latéralement de facon telle que les zones d'entrainement, respectivement de collecte de deux modules soient jointes au niveau de la jonction de ces modules.

4. Installation selon la revendication 2 caractérisée en ce que chaque étage est constitué d'un module délimité par un plafond et un plancher de forme triangulaire, la zone d'entrainement de liquide par la vapeur étant située dans la partie la plus étroite et la zone de collecte dans la partie la plus large du module.

5. Installation selon la revendication 2 caractérisée en ce que sont prévus des moyens de chauffage des parois latérales (2, 3) et des moyens de refroidissement du plafond de chaque étage.

6. Installation selon l une des revendications précédente carctérisée en ce que l'axe commun est incliné de 0.5 à 10 degrés sur l'horizontale.

## Claims

1. Process for the transfer of components with heat transfer between at least one liquid stream and at least one vapour stream circulating in opposite directions by successive steps in a series of n stages sharing a common axis, the liquid stream and the vapour stream progressions being on opposite directions,
characterised by the fact that:
- The common axis is nearly horizontal,
- In each stage of level n, the liquid stream and the vapour stream move concurrently and transversally to the common axis from at least one entrainment zone in which the liquid is introduced through an orifice (8,16,29) from the stage of level n+1 by aspiration, then entrained upwards by the vapour coming from the stage of level n-1, the liquid stream and the vapour stream being then separated by gravity when travelling nearly horizontally in at least one intermediate zone before flowing separately in at least one collect zone, the entrainment and collect zones being alternated from one stage to the other in such a way that the liquid and the vapour separated in one stage of level n feed directly into the liquid and vapour entrainment zone of stages level n-1 and n+1 respectively.

2. Device for the carrying out of the procedure detailed in claim 1, characterised by the following when on stream:
A number of separation stages with a common axis arranged side by side horizontally and separated by common, nearly vertical walls, each stage includes at least a modular chamber in which the liquid stream and the vapour stream move concurrently and transversally to the common axis from an entrainment zone in which the vapour stream coming from a first orifice (10,30) located at the bottom part of one side extremity of the modular chamber aspires through a siphon (9, 34) and moves upwards with the liquid coming through a second adjacent orifice (7, 29) up to a collect zone in which the liquid stream and the vapour stream are separated and flow off through the third (15, 32) and fourth adjacent orifice (18, 31) respectively, located at the bottom part of the other side extremity of the modular chamber and separated by a barrier, the entrainment and collect zones being separated by an intermediate zone in which the liquid and the vapour are separated by gravity, position of the orifices being alternated from one modular chamber to the corresponding modular chamber of the adjacent stage in order that the said first (10, 30) and fourth (18, 31) orifices, respectively second (7, 29) and third (15, 32) orifices being regrouped in a common one (11, 19), respectively (8, 16) done though the common wall separating the said modular chamber to the modular chamber corresponding to the adjacent stage.

3. The device pertaining to claim 2 in which each stage has a number of juxtapositioned modular chambers positioned laterally in such a way that the entrainment, respectively collect zone of two modular chambers being jointed at the level of the junction of the two modular chambers.

4. The device pertaining to claim 2 in which each chamber has a triangular ceiling and a triangular floor, the entrainment zone of the liquid by the vapour should be situated in the narrow point of the triangular chamber and the separation zone should be situated in the wider base of the triangular chamber.

5. The device pertaining to claim 2 in which the stages have walls (2, 3) foreseen for heat exchange with an outside source and a ceiling foreseen for the cooling by an outside source.

6. The device pertaining to claim 2 in which the common axis of the chambers is inclined from 0.5 to 10 degrees horizontally.

## Patentansprüche

1. Verfahren fur den transfer der Bestandteile mit thermischem Transfer zwischen mindestens einem Fluessigkeitsstrom und mindestens einem Dampfstrom , die durch aufeinanderfolgenden Etappen in einer Serie von n Stufen mit gemeinsamer Achse laufen, in der Voraussetzung, dass die Steigerung der Fluessigkeit und der Dampfs in umgekehrter Richtung von einer Stufe zur anderen vorgeht,
insofern karakterisiert, dass die gemeinsame Achse ungefaehr waagerecht ist, und dass die Fluessigkeit und der Dampf in jeder Reihestufe n gemeinsam und in die Quere der gemeinsame Achse laufen, und zwar ab mindestens einer Abtriebszone, wobei die Fluessigkeit eingeleitet wird durch eine Oeffnung (8,16,29) von Reihestufe n+1 mittels Einsaugung, und dann zusammen mit Dampf von der Reihenstufe n-1 erhoben wird, die Flussigkeit und der Dampf werden dann durch Schwere getrennt, im Laufe eines fuehlbar waagerechten Laufens in mindestens einer Uebergangszone, bevor sie sich auf getrennte Weise in mindestens eine Sammelzone einfliessen, waehrend die Antriebszone und die Sammelzone von einer Stufe zur anderen Stufe aufeinanderfolgen, so dass die Fluessigkeit und der Dampf in einer Stufe/Reihenstufe n unmittelbar mit Fluessigkeit, beziehungsweise mit Dampf eine Antriebzone der Reihe n-1, beziehungsweise n+1 beschicken.

2. Einrichtung fur die Verwertung des Verfahrens nach der Forderung 1, insofern karakterisiert dass sie folgende Funktionen mit sich bringt:
- eine Vielheit von trennenden Stufen einer gemeinsamen Achse, die waagerecht nebeneinander zurechtgestellt und dabei durch fuehlbar gemeinsame fast senkrechte Waende getrennt werden, jede Stufe enthaelt mindestens einen Modul, in welchem die Fluessigkeit und der Dampf gemeinsam und in die Quere der gemeinsamen Achse ab einer Antriebszone laufen, in welcher Dampf aus einer Oeffnung 1 (10,30) an einem seitlichen Endpunkt des Moduls Fluessigkeit bis zu einer Sammelzone (9,34) einsaugt und erhebt, in dem diese Fluessigkeit aus einer anliegenden Oeffnung 2 (7 ,29) entstammt, in diese Sammelzone fliessen getrennte Fluessigkeit und Dampf durch anliegende Oeffnungen 3 (15,32), beziehungsweise 4 (18, 31), die sich am anderen seitlichen Endpunkt des Moduls befinden und von einer Schwelle (40) getrennt sind, die Zurechtstellung der Oeffnungen wird von einem Modul zum entsprechenden Modul der anliegenden Stufe gewechselt, so dass die obengenannten Oeffnungen 1 (10,30) und die 4 (18,31), beziehungsweise 2 (7,29) und 3 (15, 32) in eine gemeinsame Oeffnung (11,29), beziehungsweise (8,16) vermischt werden, diese gemeinsame Oeffnung wird in einer gemeinsamen wand gebohrt, die den obengenannten Modul vom entsprechenden Modul der anliegenden Stufe trennt.

3. Einrichtung nach der Forderung 2, insofern karakterisiert dass jede Stufe eine Vielheit von seitlich nebeneinander gestellten Modulen enthalt, so dass die Antriebszonen, beziehungsweise die Sammelzonen von zwei Modulen aneinanderkommen.

4. Einrichtung nach der Forderung 2 insofern karakterisiert, dass jede Stufe aus einem Modul besteht ,der durch eine Decke und einen Boden dreieckiger Form abgegrenzt wird, indem die Antriebszone der Flussigkeit durch den Dampf sich im engsten Teil des Moduls und die Sammelzone im breitesten Teil des Moduls befinden.

5. Einrichtung nach der Forderung 2 , insofern karakterisiert, dass eine Heizanlage fuer die Seitenwaende (2,3) und eine Kuehlanlage fur die Decke in jeder Stufe vorgesehen werden.

6. Einrichtung nach einer der verigen Forderung 2, insofern karakterisiert, dass die gemeinsame Achse von 0,5 bis 10 grad auf der Horizontale abfallend ist.
